**Europäisches Patentamt**

**European Patent Office**

**Office européen des brevets**

(19)

(11) Veröffentlichungsnummer : **0 007 104 B2**

(12) # NEUE EUROPÄISCHE PATENTSCHRIFT

(45) Veröffentlichungstag der neuen Patentschrift : **21.10.87**

(51) Int. Cl.⁴ : **B 62 D 25/10**, B 60 K 15/04

(21) Anmeldenummer : **79102410.2**

(22) Anmeldetag : **12.07.79**

(54) **Tankklappenvorrichtung zur Abdeckung einer flachen Karosseriemulde eines Fahrzeugs.**

(30) Priorität : **13.07.78 DE 7820974 U**
**21.11.78 DE 2850470**

(43) Veröffentlichungstag der Anmeldung :
**23.01.80 Patentblatt 80/02**

(45) Bekanntmachung des Hinweises auf die Patenterteilung : **28.10.81 Patentblatt 81/43**

(45) Bekanntmachung des Hinweises auf die Entscheidung über den Einspruch : **21.10.87 Patentblatt 87/43**

(84) Benannte Vertragsstaaten :
**FR GB**

(56) Entgegenhaltungen :
**DE-A- 2 242 822**
**DE-A- 2 248 788**
**DE-A- 2 657 747**
**DE-B- 2 520 472**
**DE-C-   952 769**
**US-A- 2 865 653**

(73) Patentinhaber : **BOSSERT KG**
**Schützenstrasse 20-24**
**D-7340 Geislingen (DE)**

(72) Erfinder : **Bossert, Walter, Dipl.-Ing.**
**Franzosenweg 21**
**D-7340 Weiler o.H. (DE)**

(74) Vertreter : **Raible, Hans, Dipl.-Ing. et al**
**Lenbachstrasse 32**
**D-7000 Stuttgart 1 (DE)**

EP 0 007 104 B2

Jouve, 18, rue St-Denis, 75001 Paris, France

## Beschreibung

Die Erfindung betrifft eine Tankklappenvorrichtung zur Abdeckung einer flachen Karosseriemulde eines Fahrzeugs.

Aus der US-PS 2 865 653 kennt man eine Tankklappenvorrichtung für einen Personenkraftwagen. Diese Vorrichtung hat ein Scharnier zur drehbaren Anlenkung der Klappe, sowie eine Kniehebelanordnung, welche die Klappe in ihrer Offen- und ihrer Schließstellung hält und in einer Zwischenstellung ihre gestreckte Lage einnimmt, wobei einer der Hebel der Kniehebelanordnung als Federglied und der andere Hebel starr ausgebildet ist. Diese Tankklappenvorrichtung benötigt jedoch sehr viel Einbautiefe (sie ist in der Heckflosse eines sogenannten Straßenkreuzers untergebracht), da sich bei geschlossener Tankklappe die Kniehebelanordnung etwa senkrecht von der Klappe weg ins Fahrzeuginnere erstreckt. Zudem ergeben sich relativ hohe Herstellungskosten für die bekannte Vorrichtung.

Ferner kennt man aus der DE-PS 952 769 eine Vorrichtung zur Erleichterung des Öffnens von Gepäckraumdeckeln von Kraftfahrzeugen. Der Gepäckraumdeckel ist dort über ein Scharnier drehbar an der festen Wandung des Gepäckraums angelenkt. Eine Kniehebelanordnung ist vorgesehen, welche den Kofferraumdeckel in der Offenstellung festhält und welche das Schließen (durch Erzeugen einer zusätzlichen Schließkraft) erleichtert. Einer der Hebel dieser Kniehebelanordnung ist starr ausgebildet, der andere als Biegestab, welcher quer zu seiner Längserstreckung auslenkbar ist, wenn der Kofferraumdeckel geöffnet oder geschlossen wird. — Diese bekannte Vorrichtung benötigt für die Kniehebelmechanik zusätzlichen Raum seitlich neben der zu verschließenden Öffnung und eignet sich dadurch nicht zur Verwendung bei Tankmulden, da dort üblicherweise die Tankklappenvorrichtung samt ihrer Mechanik in der Tankmulde selbst untergebracht wird, um z. B. nach einem Unfall einen leichten Austausch zu ermöglichen und um das Eindringen von Schmutz aus dem Inneren der Karosserie, z. B. aus den Radkästen, in den Einfüllstutzen des Tanks zu verhindern.

Deshalb ist es eine Aufgabe der Erfindung, eine Tankklappenvorrichtung zu schaffen, welche sich zur Anbringung in flachen Karosseriemulden eignet.

Nach der Erfindung wird die angegebene Aufgabe gelöst durch eine Tankklappenvorrichtung für ein Fahrzeug zur Abdeckung einer flachen Karosseriemulde dieses Fahrzeugs, mit einem Scharnier zur drehbaren Anlenkung einer Tankklappe, welche in ihrer Schließstellung eine in der Karosseriemulde vorgesehene Einfüllöffnung und diese Karosseriemulde abdeckt, und mit einer Kniehebelanordnung, welche die Tankklappe in ihrer Offen- und ihrer Schließstellung festhält und in einer Zwischenstellung eine gestreckte Lage einnimmt, wobei einer der Hebel der Kniehebelanordnung als starrer und mit der Tankklappe starr verbundener Hebel und der andere Hebel als quer zu seiner Längserstreckung federnd auslenkbarer Biegestab ausgebildet ist, dessen beide Enden entweder mit der Tankklappe bzw. dem starren Hebel oder mit einem fahrzeugfesten Teil gelenkig verbunden sind, und dessen Mittelabschnitt entweder mit dem fahrzeugfesten Teil oder mit dem starren Hebel bzw. mit der Tankklappe gelenkig verbunden ist, wobei die beiden Enden der Kniehebelanordnung mit dem Fahrzeug gelenkig verbunden sind und bei geschlossener Tankklappe in der flachen Karosseriemulde und unterhalb der der Fahrzeugaußenseite abgewandten Seite der Tankklappe liegen. Eine solche Tankklappenvorrichtung läßt sich einfach und preiswert herstellen.

Sie eignet sich durch ihren gedrungenen, flachen Aufbau sehr gut zur Anbringung in flachen Karosseriemulden, ergibt aber sowohl in der Offen- wie in der Schließstellung die erforderlichen Haltekräfte, um die Tankklappe beim Tanken offen und bei der Fahrt sicher geschlossen zu halten.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt :

Figur 1 eine Draufsicht von aussen auf ein erstes Ausführungsbeispiel einer erfindungsgemässen Klappenvorrichtung, die an einem Ende teilweise weggeschnitten dargestellt ist, um unter anderem Form und Anordnung des hierbei verwendeten länglichen Federglieds zu zeigen,

Figur 2A einen Schnitt, gesehen längs der Linie II-II der Figur 1, also bei geschlossener Klappe,

Figur 2B einen Schnitt analog Fig. 2A, aber bei geöffneter Klappe,

Figur 3 einen Schnitt, gesehen längs der Linie III-III der Fig. 1,

Figur 4 eine Einzelheit aus Fig. 2A, in vergrössertem Masstab,

Figur 5 ein Schaubild zur Erläuterung des Festhaltens der Klappe in ihren beiden Endlagen,

Figur 6 einen vergrösserten Schnitt, gesehen längs der Linie VI-VI der Fig. 1,

Figur 7 einen vergrösserten Schnitt, gesehen längs der Linie VII-VII der Fig. 1,

Figur 8 das beim ersten Ausführungsbeispiel verwendete längliche Federglied, im entspannten Zustand,

Figur 9 das Federglied nach Fig. 8 vor der endgültigen Montage,

Figur 10 eine Draufsicht auf ein 2. Ausführungsbeispiel einer erfindungsgemässen Klappenvorrichtung und ihrer Anlenkung, wobei die Klappe selbst nur mit strichpunktierten Linien angedeutet ist,

Figur 11 einen Schnitt, gesehen längs der Linie XI-XI der Fig. 10,

Figur 12 einen Schnitt analog Fig. 11, aber bei geöffneter Klappe,

Figur 13 eine in Fig. 10 mit XIII bezeichnete Einzelheit, in vergrössertem Masstab,

Figur 14 . eine Draufsicht auf ein 3. Ausführungsbeispiel einer erfindungsgemässen Klappenvorrichtung,

Figuren 15 und 16 zwei vergrösserte Darstellungen des bei Fig. 14 verwendeten, bevorzugt aus Kunststoff hergestellten Scharniers und der an diesem befestigten Kunststoff-Feder, aus 2 verschiedenen Richtungen gesehen,

Figur 17 eine Ansicht, gesehen in Richtung des Pfeiles XVII der Fig. 14,

Figur 18 eine Draufsicht von unten auf den mit den Scharniergliedern gemäss Fig. 17 versehenen Teil der Klappe,

Figur 19 einen Schnitt, gesehen längs der Linie XIX-XIX der Fig. 14, also bei geschlossener Klappe,

Figur 20 einen Schnitt analog Fig. 19, aber bei geöffneter Klappe, .

Figur 21 einen Schnitt, gesehen längs der Linie XXI-XXI der Fig. 14, und

Figur 22 eine stark vergrösserte Schnittdarstellung durch das längliche Federglied und seine Anlenkung am Scharnier, gesehen längs der Linie XIX-XIX der Fig. 14.

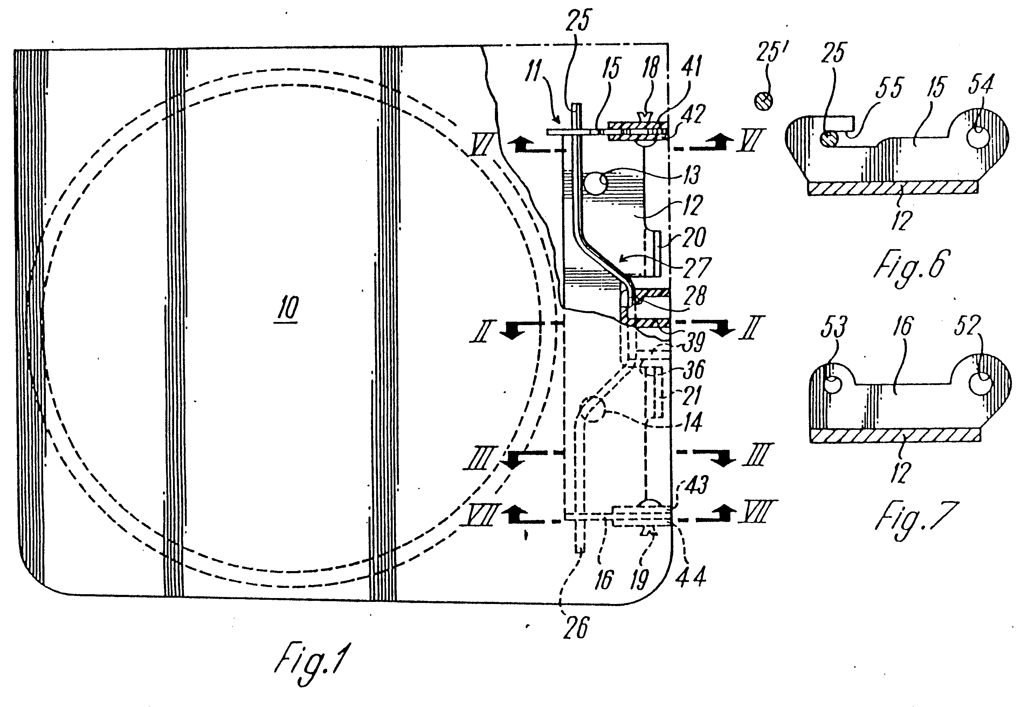

Fig. 1 zeigt eine Draufsicht von aussen auf eine erfindungsgemässe Vorrichtung mit einer Klappe 10, die hier als Spritzgussteil aus einem geeigneten Kunststoff, z. B. einem schlagzähen Polyamid, ausgebildet ist, welcher Kunststoff zweckmässig mit geeigneten Fasern oder Kugeln aus Glas oder Graphit verstärkt ist, z. B. hohlen Glaskügelchen. Bevorzugt wird ein Polyamid mit einem Glasfaseranteil von 30 %, z. B. Durethan. Das obere rechte Eck der Klappe 10 ist weggeschnitten dargestellt und durch strichpunktierte Linien angedeutet.

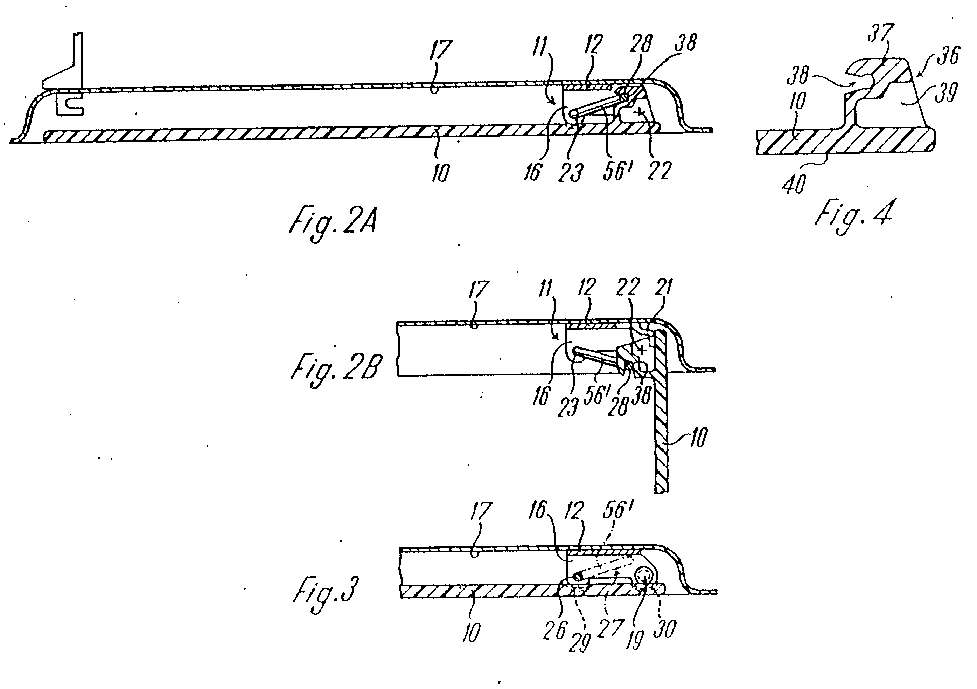

Zum Befestigen der Klappe 10 in einer flachen Karosseriemulde 17 (vergleiche Fig. 2 und 3) eines im übrigen nicht dargestellten Fahrzeugs dient ein im Querschnitt etwa U-förmiges Scharnierlager 11, das aus einer Basis 12 mit zwei Befestigungslöchern 13, 14 und zwei seitlich hochgebogenen Wangen 15, 16 besteht. Das Scharnierlager 11 wird mittels nicht dargestellter Blechschrauben, die die Löcher 13 und 14 durchdringen, in dieser Mulde 17 befestigt, und an seinen Seitenwangen 15, 16 ist wie dargestellt mittels zweier Nieten 18, 19 die Klappe 10 drehbar angelenkt. Das Scharnierblech 11 ist ferner an seiner einen Längsseite zu Anschlägen 20, 21 hochgebogen, welche die grösste Offenstellung der Klappe 10 begrenzen, wie das Fig. 2B klar zeigt. Die Seitenwangen 15, 16 dienen auch zur drehbaren Lagerung der beiden Enden 25, 26 eines länglichen Federglieds 27, das im folgenden auch als Biegestab bezeichnet wird und dessen Mittelabschnitt 28 etwa zylindrisch ausgebildet ist und parallel zur Drehachse der Klappe 10 verläuft, welche mit 22 bezeichnet ist. Die beiden Enden 25 und 26 haben im eingebauten Zustand ebenfalls eine gemeinsame, zur Drehachse der Klappe 10 parallele Achse 23 (vgl. Fig. 2A und 2B). Die Drehachse 22 verläuft durch die beiden Nieten 18 und 19. Wie man am besten aus Fig' 3, 6 und 7 erkennt, haben die Seitenwangen 15 und 16 ihre grösste Höhe jeweils an den Stellen, an denen sie mit entsprechenden Ausnehmungen zur Aufnahme der Nieten 18 bzw. 19 und der Enden 25 bzw. 26 des Biegestabs 27 versehen sind, und damit die Klappe 10 dort nicht an die Seitenwangen 15, 16 anstösst, ist sie mit entsprechenden Ausnehmungen 29, 30 versehen, die in Fig. 3 angedeutet sind. Dies trägt zur niedrigen Bauhöhe der gesamten Anordnung bei, ohne die Klappe 10 zu schwächen, da die Ausnehmungen 29, 30 nur ein sehr kleines Volumen haben.

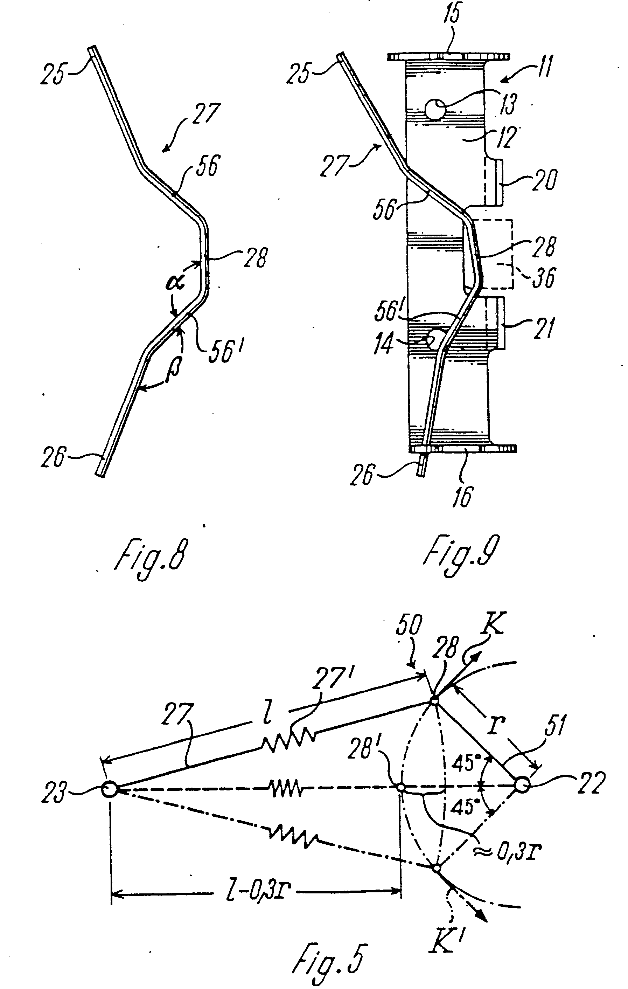

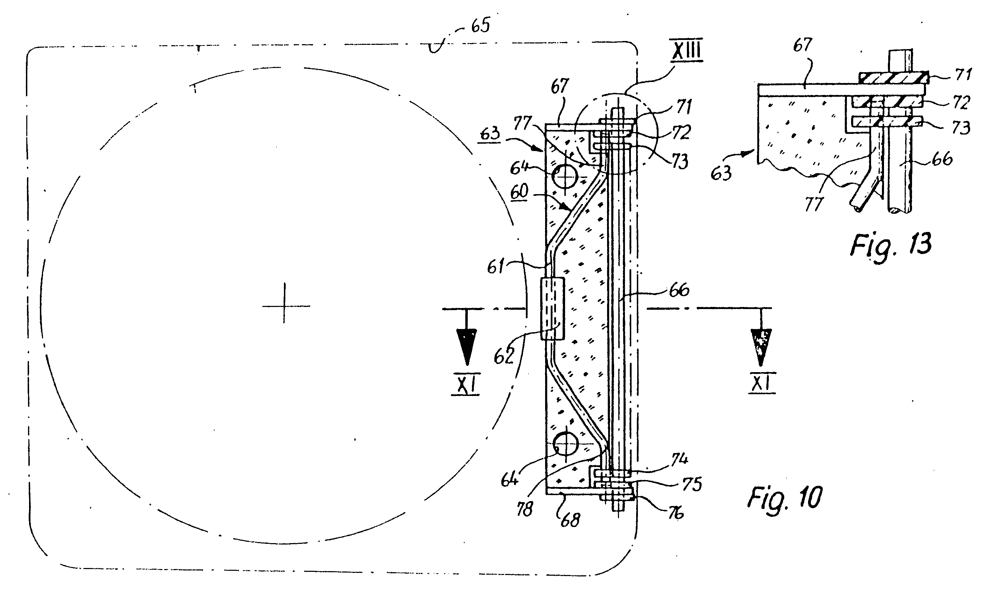

Wie die Fig. 6 und 7 zeigen, sind die Seitenwangen 15 und 16 unterschiedlich ausgebildet. Die in Fig. 1 untere Seitenwange 16 hat auf der einen Seite ein Loch 52 zur Aufnahme der Niete 19, und auf der anderen Seite ein Loch 53 zur Aufnahme des Endes 26 des Federbügels 27.

Die in Fig. 1 obere Seitenwange 15 hat ebenfalls ein Loch 54 zur Aufnahme der Niete 18, und sie hat ferner einen etwa parallel zur Basis 12 verlaufenden Schlitz 55, in den wie dargestellt das Federende 25 leicht eingehängt werden, kann, z. B. von Hand oder mit einem Werkzeug.

Warum dieser Schlitz 55 ? Wie bereits beschrieben, besteht die Klappe 10 aus Kunststoff und wird bei der Herstellung des Fahrzeugs mit dessen Farbe lackiert und anschliessend durch Einbrennen getrocknet. Da beim Einbrennen die Festigkeit des Kunststoffs vorübergehend absinkt, sollen hierbei keine mechanischen Kräfte auf ihn wirken. Deshalb wird bei der Anlieferung das Federende 25 ausgehängt, wodurch sich der Biegestab 27 entspannt und etwa die in Fig. 9 dargestellte Lage einnimmt, in der auf die Tankklappe keine Kräfte mehr von dem Biegestab 27 wirken. In Fig. 6 ist dies durch die Position 25' (entspanntes Federende 25) angedeutet. Nach dem Lackieren, Einbrennen und Abkühlen wird das Federende 25 in den Schlitz 55 eingehängt, und die Klappe 10 ist dann gebrauchsfähig.

Fig. 8 zeigt den Biegestab 27 in seiner gestreckten Form, in der er etwa die Querschnittsform eines tiefen Tellers (mit sehr breitem Rand) oder eines Sonnenhuts mit breiter Krempe hat. Das Mittelteil 28, das eine Länge von ca. 17 mm haben kann, geht unter einem stumpfen Winkel alpha (ca. 130°) beidseits über in einen ebenfalls ca. 17 mm langen geraden Abschnitt 56 bzw. 56', und diese gehen jeweils unter einem stumpfen, fast gestreckten Winkel beta (ca. 160°) über in die geraden Endabschnitte 25 bzw. 26. Wie man ferner aus Fig. 1 erkennt, wird beim Einhängen des Endes 25 der Winkel alpha grösser und der Winkel beta kleiner, wodurch die Feder 27 eine entsprechende Vorspannung erhält. Wichtig ist auch, dass die Endabschnitte 25 und 26 dabei jeweils etwa parallel zur Basis 12 verlaufen, um ein Klemmen im Schlitz 55 bzw. im Loch 53 sicher zu vermeiden und dadurch auch nach Jahren eine sichere, quietschfreie Funktion der Klappe zu gewährleisten. Die beschriebene Federform trägt hierzu wesentlich bei.

Wie man aus Fig. 8 ferner entnimmt, schliessen die Endabschnitte 25 und 26 bei ungespannter Feder einen Winkel von etwa 120 bis 140°, bevorzugt 130°, ein.

Im Rahmen der Erfindung ist naturgemäss bei der Ausbildung der Bügelfeder 27 eine grosse Gestaltungsfreiheit gegeben, aber die dargestellte Form stellt eine bevorzugte Ausführungsform dar, die sich im praktischen Versuch ausserordentlich bewährt hat.

Im Bereich ihrer Drehachse 22 ist die Klappe 10 auf ihrer Innenseite und etwa in der Mitte zwischen den beiden Nieten 18 und 19 mit einem höckerartigen Vorsprung 36 versehen, dessen in Fig. 4 oberer Abschnitt 37 mit einer Ausnehmung 38 zum Einclipsen des Mittelteils 28 der Bügelfeder 27 versehen ist. Der obere Abschnitt 37 ist nur durch einige schmale und dünne Stege 39 mit der eigentlichen Klappe 10 verbunden. Hierdurch wird in sehr geschickter Weise erreicht, dass die in Fig. 4 mit 40 bezeichnete Aussenseite der Klappe 10 auch dann eine glatte Oberfläche behält, wenn der Kunststoff nach dem Ausformen im Bereich des höckerartigen Vorsprungs 36 etwas schrumpft.

Zum Anlenken an den Seitenwangen 15, 16 des Scharnierlagers 11 ist die Klappe 10 ferner mit schmalen, stegartigen Scharniergliedern 41, 42, 43 und 44 versehen, welche mit entsprechenden Ausnehmungen für die Nieten 18, 19 versehen sind und gegen die Seitenwangen 15 bzw. 16 anliegen und somit die Klappe in Höhenrichtung führen. Die Scharnierglieder 41-44 sind ebenfalls deshalb so schmal ausgebildet, damit sich auf der Aussenseite 40 beim Schrumpfen des Kunststoffs nach dem Entformen keine unschönen Vertiefungen bilden.

Wie die Fig. 2A und 2B zeigen, ist das Mittelteil 28 in die Ausnehmung 38 eingeclipst und kann sich in dieser drehen. Man erhält so eine Kniehebelanordnung, wie sie in Fig. 5 im Prinzip und in 3 verschiedenen Stellungen dargestellt ist, und zwar wird der starre Hebel, der in Fig. 5 mit 51 bezeichnet ist, die Länge r hat und zwischen der Drehachse 22 und dem Mittelteil 28 verläuft, von dem höckerartigen Vorsprung 36 gebildet, während der andere Hebel von dem Federglied 27 gebildet ist und deshalb in Fig. 5 ebenfalls mit 27 bezeichnet wird. Diese Feder 27 erstreckt sich von der Drehachse 23 zum Mittelteil 28 ; ihre Federeigenschaft ist in Fig. 5 durch eine Feder 27' symbolisch dargestellt.

Schon in der Schliesstellung der Klappe 10, die in Fig. 5 mit durchgehenden Linien dargestellt ist, hat das Federglied 27 eine Vorspannung, die ausreicht, um die Klappe 10 bei allen Fahrtbedingungen sicher geschlossen zu halten. Da die beiden Drehachsen 22 und 23, welche beide in den Seitenwangen 15 bzw. 16 ausgebildet sind, einen unveränderlichen festen Abstand voneinander haben, bewirkt diese Vorspannung eine Kraft K auf das Mittelteil 28 und damit ein Drehmoment auf die Klappe 10, welches bestrebt ist, diese Klappe geschlossen zu halten.

Wird die Klappe 10 geöffnet, so muss vom Benutzer ein entsprechendes Gegenmoment aufgebracht werden, wodurch in der gestreckten Stellung, die in Fig. 5 mit gestrichelten Linien angedeutet ist, die Bügelfeder 27 um etwa den Betrag 0,3. r verkürzt und ihre Spannung entsprechend erhöht wird. Die Lage des Mittelteils 28 in der gestrichelten Stellung ist in Fig. 5 mit 28' bezeichnet.

Nach dem Überschreiten der gestreckten Stellung kehrt sich die Richtung des Drehmoments um (Kraft K' in Fig. 5), und dieses Drehmoment ist nun bestrebt, die Klappe 10 in ihre in Fig. 28 dargestellte Offenstellung zu drehen und dort zu halten. In Fig. 5 ist die Offenstellung mit strichpunktierten Linien dargestellt.

Beim Öffnen dreht sich die Klappe 10 um etwa 90°. In vielen Fällen ist es zweckmässig, die gestreckte Stellung der Kniehebelanordnung 50 so zu legen, dass sie etwa nach dem halben Öffnungsweg der Klappe 10 erreicht wird, so, wie das Fig. 5 zeigt, doch sind auch andere Winkelverhältnisse möglich. Die Klappe 10 kann selbstverständlich im geschlossenen Zustand auch verriegelt oder sonstwie gesichert werden.

Die Klappe nach dem ersten Ausführungsbeispiel passt wie dargestellt z. B. in eine muldenförmige Vertiefung 17 von nur 13 mm Tiefe und hat dabei im Vergleich zu den bekannten Klappen einen wesentlich einfacheren Aufbau, der zudem auch äusserst wenig korrosionsanfällig ist. Dadurch, dass der zweite Arm der Kniehebelanordnung als längliches Federglied ausgebildet ist, steht für die Energiespeicherung in dieser Feder ein ausreichend grosses Werkstoffvolumen zur Verfügung, denn diese Feder erstreckt sich im wesentlichen senkrecht zu der von ihr zu erzeugenden Federkraft und entspricht daher in optimaler Weise der Forderung nach niedriger Bauhöhe. Die Klappe 10 lässt sich sehr leicht entformen, weil die Ausnehmungen zwischen den Stegen 39 und zwischen den Scharniergliedern 41-44 sich alle nach derselben Seite hin öffnen und daher für alle ein gemeinsamer Kern verwendet werden kann, sich also ein einfaches Formwerkzeug ergibt.

Naturgemäss könnte die Klappe 10 hier wie auch bei den folgenden Ausführungsbeispielen aus einem anderen Werkstoff als dem angegebenen glasfaserverstärkten Kunststoff ausgebildet werden, z. B. aus Zinkdruckguss, Aluminiumdruckguss, oder als Blechteil.

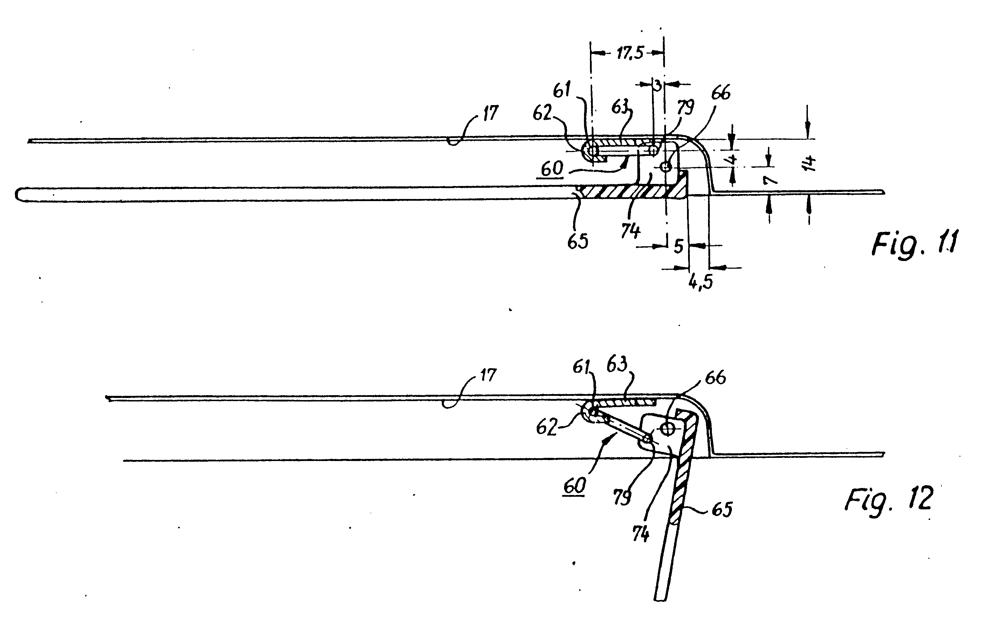

Das zweite Ausführungsbeispiel nach den Fig. 10-13 zeigt eine Variante der Anordnung des länglichen Federglieds, das hier mit 60 bezeichnet ist. Dieses hat weitgehend dieselbe Form wie das Federglied 27, also ebenfalls etwa die Querschnittsform eines Suppentellers, ist aber hier mit seinem Mittelabschnitt 61 in einem im Querschnitt etwa U-förmigen Lagerteil 62 am Scharnierlager 63 eingehängt, welch letzteres ebenfalls 2 Befestigungslöcher 64 zur Befestigung in der Karosseriemulde 17 aufweist, deren Tiefe hier z. B. 14 mm betragen kann. Die Form des Lagerteils 62 geht besonders deutlich aus den Fig. 11 und 12 hervor und ermöglicht es, das Federglied 60 erst nach dem Lackieren und Einbrennen einzuhängen und dadurch die Klappe 65, deren Form und Werkstoff denjenigen der Klappe 10 weitgehend entsprechen, beim Einbrennvorgang von äusseren Kräften freizuhalten.

Die Klappe 65 ist mittels einer Welle 66 in den beiden Seitenwangen 67, 68 des Scharnierlagers 11 gelagert und hat hierzu insgesamt 6 schmale Scharnierglieder 71-76, die jeweils durch Abstände voneinander getrennt sind, um beim Erstarren des Kunststoffs Vertiefungen der Oberfläche auf der Aussenseite der Klappe 65 zu vermeiden. Die Scharnierglieder 71 und 72 nehmen zwischen sich die Seitenwange 67 auf, während die Scharnierglieder 75 und 76 zwischen sich die Seitenwange 68 aufnehmen und dadurch die Klappe 65 in Höhenrichtung führen.

Die Scharnierglieder 72-75 dienen ferner zur Aufnahme und Anlenkung der Enden des Federglieds 60, welche mit 77 (oberes Ende) und 78 (unteres Ende) bezeichnet sind. Hierzu befinden sich dort Löcher 78, von denen eines in den Fig. 11 und 12 dargestellt ist und in die diese Federenden gesteckt sind.

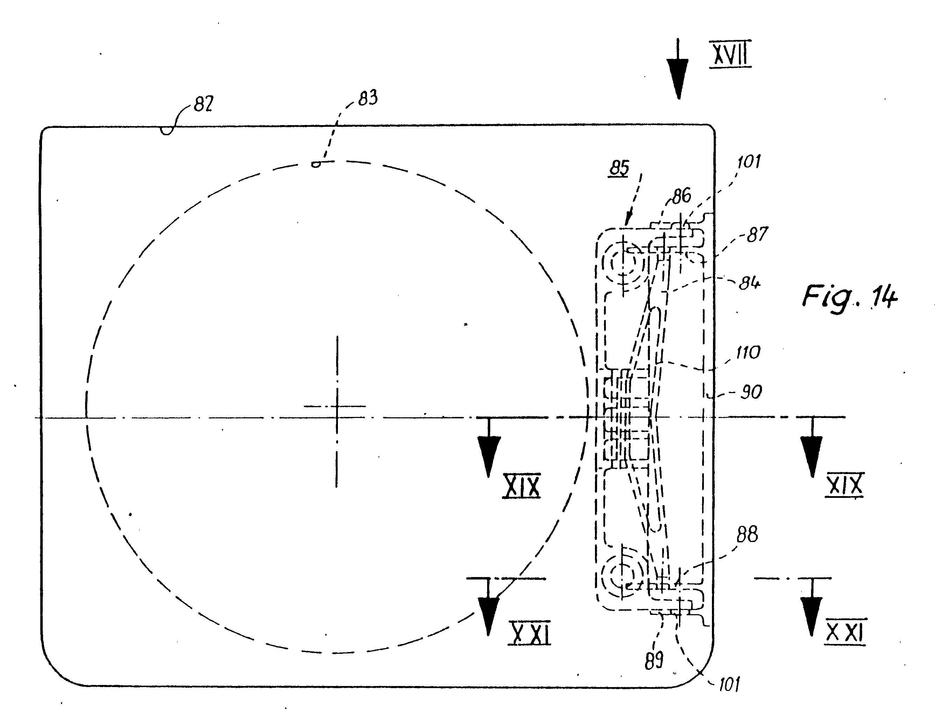

Die Federenden 77 und 78 erstrecken sich hier bis ziemlich nahe an die Seitenwangen 67 bzw. 68 heran, wie das Fig. 13 besonders deutlich zeigt. Dies ergibt eine gute Führung für diese Enden, die sich bei einer Betätigung der Klappe jeweils etwas in Längsrichtung verschieben. Ausserdem liegen hier in sehr vorteilhafter Weise die Angriffspunkte der Federkraft direkt neben den Lagerstellen, so dass diese Federkraft die Klappe 65 praktisch nicht verformen kann, zumal an jeder Angriffsstelle nur die halbe Federkraft wirksam ist. Beim ersten Ausführungsbeispiel dagegen wird die gesamte Kraft der Feder 27 an einer einzigen Stelle in die Klappe 10 eingeleitet, und diese Stelle ist dazuhin noch weit von der Lagerstelle entfernt, so dass dort die Klappe 10 wesentlich steifer ausgebildet sein muss, um ein unerwünschtes Auswölben durch die Kraft der Feder 27 zu vermeiden. Bei Klappen aus Kunststoff ist die Einleitung der Federkraft an mehreren Stellen günstiger, und die Erfindung sieht deshalb die Einleitung der Federkraft in die Klappe bevorzugt an mehreren Stellen vor, welche bevorzugt dicht bei den Lagerstellen liegen und deren Zahl auch grösser als 2 sein kann, wobei man dann eine entsprechend gewellte Feder oder auch mehrere Einzelfedern verwenden kann.

Die Wirkungsweise beruht wiederum auf dem Kniehebelprinzip und entspricht völlig der zu Fig. 5 gegebenen Beschreibung. Fig. 11 gibt — für die Erläuterung der Kniehebelwirkung — einige Masse an. Danach beträgt die Länge der — auch im Ruhezustand bereits vorgespannten — Feder 60 hier 14,5 mm, der Mittenabstand der Welle 66 und des Lochs 79, also die Grösse r in Fig. 5, beträgt 5 mm, und der — unveränderliche — Abstand zwischen Welle 66 und Mittelabschnitt 61 beträgt etwa 18 mm.

Wird die Klappe 65 aus der Stellung gem. Fig. 11 um 40° geöffnet, so liegen die Punkte 62, 79 und 66 auf einer Linie, und die Feder 60 wird auf 12,9 mm verkürzt, also um etwa 11 %, und wird dadurch entsprechend stärker gespannt. Bei Überschreiten dieser Totpunktlage federt die Klappe 65 dann weiter bis zu der in Fig. 12 dargestellten Offenstellung, bei der sie etwa 80° geöffnet ist und bei der die Feder 60 wieder wie in der Ausgangslage (Fig. 11) eine Länge von 14,5 mm hat.

Naturgemäss dienen die angegebenen Masse nur zur Erläuterung und zum besseren Verständnis der Erfindung, sind also Ausführungsbeispiel. Man kann sie ohne weiteres variieren, z. B. um eine andere Totpunktlage zu erhalten, oder um bei einer tieferen Mulde 17 sich einer anderen Geometrie anzupassen.

Beim 1. und 2. Ausführungsbeispiel wurde jeweils ein längliches Federglied aus Federstahl verwendet.

Bei Anordnungen mit Kunststoffteilen ist aber generell anzustreben, alle Teile aus Kunststoff zu machen, um die vollen Vorteile des Kunststoffs zur Geltung zu bringen, insbesondere seine Korrosionsfreiheit. Denn die Stahlfedern 27 oder 60 können natürlich im Laufe der Zeit rosten und müssen deshalb gegen Rost geschützt werden. Dasselbe gilt für das Scharnierlager.

Das dritte Ausführungsbeispiel nach den Fig. 14 bis 22 zeigt deshalb eine Klappenvorrichtung, welche einschliesslich des Scharnierlagers und des Federglieds vollständig aus Kunststoff aufgebaut ist und den Vorteil der Korrosionsfreiheit hat. Ausserdem ist diese Vorrichtung auch sehr leicht zu montieren und preiswerter in der Herstellung als die vorhergehenden Ausführungsbeispiele. Auch beim dritten Ausführungsbeispiel werden für gleiche oder gleichwirkende Teile wie in den vorhergehenden Figuren jeweils dieselben Bezugszeichen verwendet.

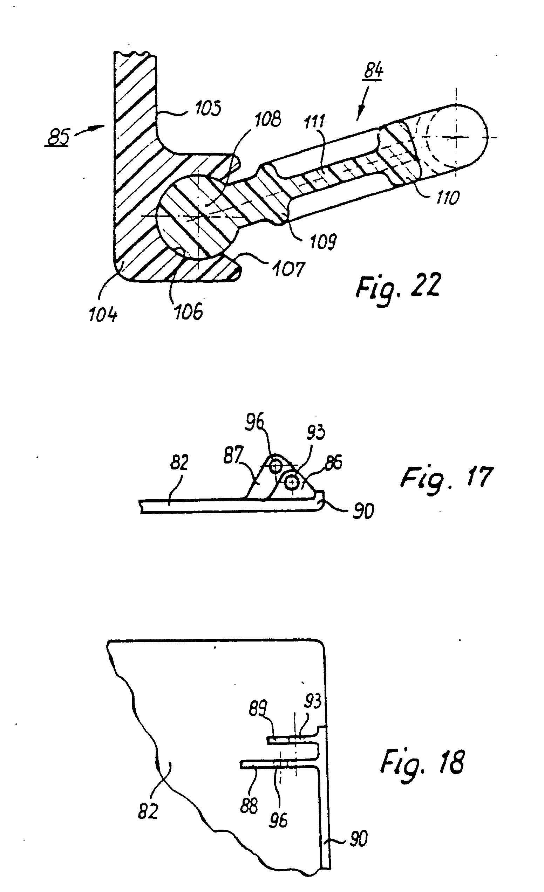

Fig. 14 zeigt in Draufsicht eine Tankklappe 82 ; mit 83 ist die Einfüllöffnung des Tanks angedeutet, die von der geschlossenen Klappe 82 abgedeckt wird. Die Klappe 82 besteht auch hier vorzugsweise aus einem glasfaserverstärkten Kunststoff (GFK), zweckmässig einem Polyamid, z. B. Durethan. Auch das längliche Federglied, das hier mit 84 bezeichnet ist, sowie das Scharnierlager 85, sind aus demselben GFK hergestellt. Die Klappe 82 hat an ihrer Unterseite lediglich vier Scharnierglieder 86-89, welche senkrecht von der Klappe abstehen und an der linken aussenseite der Klappe (bezogen auf Fig. 14) durch einen Steg 90 verbunden sind. Alle Scharnierglieder sind flächig und verlaufen parallel zueinander. Die äusseren Scharnierglieder 86 und 89 dienen zur Anlenkung am Scharnierlager 85 und haben dazu Ausnehmungen 93, vgl. die Fig. 17 und 18. Die inneren Scharnierglieder 87 und 88 dienen zum Angriff der beiden äusseren Enden 94 und 95 des Federglieds 84 und sind hierzu jeweils mit einer Ausnehmung 96 versehen, vgl. die Fig. 17 und 18. Der in die Zeichenebene projizierte Mittelabstand der Ausnehmungen 93 und 96 entspricht dem Mass r in Fig. 5. Naturgemäss könnte man die Scharnierglieder 87 und 88 auch einsparen und dafür die Ausnehmungen 96 an den Scharniergliedern 86 und 89 vorsehen, müsste letztere dafür aber stärker ausbilden, was aus den bereits erläuterten Gründen bei einer Klappe aus Kunststoff meist unerwünscht ist, weil sich dann an diesen Stellen an der Oberfläche der Klappe Vertiefungen ausbilden könnten. Die dargestellte Ausführungsform wird deshalb bevorzugt, wobei auch hier anzustreben ist, die beiden Scharnierglieder 86 und 87 dicht beieinander anzuordnen, ebenso die beiden Scharnierglieder 88 und 89, um Verformungen der Klappe zu vermeiden, wie das bereits beim zweiten Ausführungsbeispiel ausführlich beschrieben wurde.

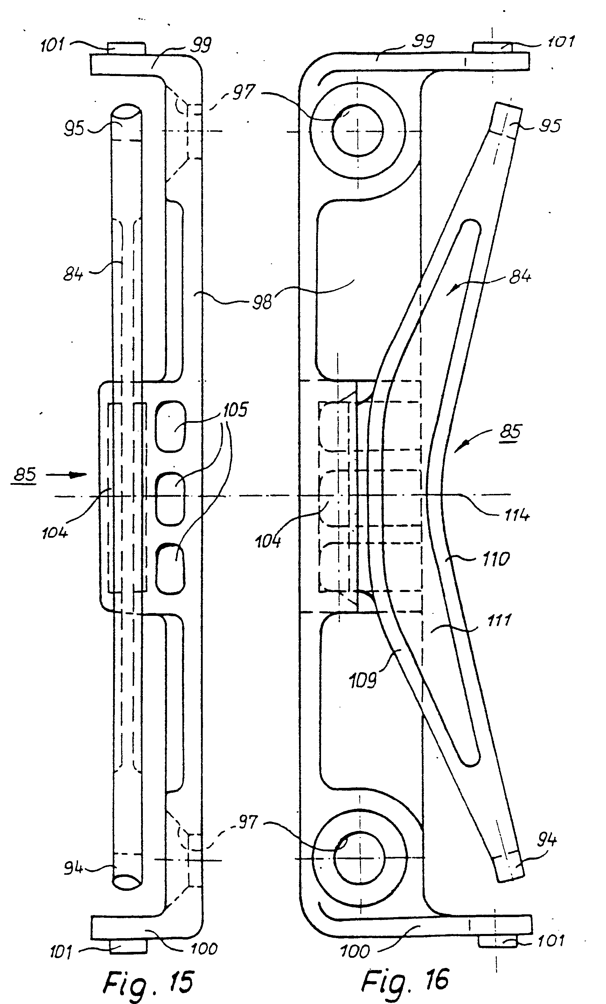

Das Scharnierlager 85 sowie das an ihm eingerastete längliche Federglied 84 aus Kunststoff sind in den Fig. 15 und 16 nochmals dargestellt. Das Scharnierlager 85 hat eine mit 2 Befestigungslöchern 97 versehene Basis 98, an deren beiden Längsenden je eine Seitenwange 99 bzw. 100 vorgesehen ist. Die Seitenwangen 99 und 100 sind an ihrer Aussenseite jeweils mit einem Zapfen 101 versehen, der jeweils zum federnden Einrasten in die zugeordnete Ausnehmung 93 an der Klappe 82 ausgebildet ist. Zum Einrasten werden die Seitenwangen 99, 100 etwas zusammengepresst, und die Zapfen 101 können dann direkt einrasten und lagern die Klappe 82 am Scharnierlager 85. Diesen eingerasteten Zustand zeigt Fig. 14. Hierbei bewirken die Seitenwangen 99 und 100 gleichzeitig auch eine Führung der Klappe 82 in Höhenrichtung. Ersichtlich ist diese Anordnung auch dann sehr vorteilhaft, wenn z. B. nach einem Unfall eine neue Klappe eingebaut werden muss, da der Austausch sehr rasch vor sich geht.

In seiner Mitte hat das Scharnierlager 85 ein Widerlager 104 für das Federglied 84. Dieses Widerlager 104 ist an seiner unteren Seite mit 3 Ausnehmungen 105 versehen und hat an seiner Oberseite eine zylindrische Ausnehmung 106, die seitlich mit einer Einführöffnung 107 versehen ist, um das Einclipsen bzw. Einrasten eines zylindrischen Vorsprungs 108 am Mittelabschnitt des Federglieds 84 zu ermöglichen wie das die Darstellung nach Fig. 22 sehr deutlich und präzise zeigt. Die Einführöffnung 107 ermöglicht auch die erforderliche Schwenkbewegung des Federglieds 84 in der Ausnehmung 106. Beim dritten Ausführungsbeispiel beträgt der maximale Schwenkwinkel an dieser Stelle weniger als 40°, ist also nicht sehr gross. Ein solcher Winkel lässt sich durch geeignete Wahl der Geometrie der Kniehebelanordnung erreichen und das dritte Ausführungsbeispiel zeigt eine entsprechende, bevorzugte Lösung.

Das Federglied 84 ist nach dem Prinzip des Doppel-T-Trägers aufgebaut, wie das Fig. 22 klar zeigt, d. h. zwischen zwei Flanschen 109, 110 erstreckt sich als Verbindungssteg eine relativ dünne Verbindungswand 111. Der Flansch 109 weist einen zum zylindrischen Abschnitt 108 parallelen Abschnitt auf, der z. B. 2 cm lang sein kann und an seinen Enden jeweils unter einem Winkel von etwa 155° abbiegt. Der Flansch 110, welcher im Betrieb auf Zug beansprucht wird, hat im Mittelabschnitt einen Abstand von etwa 6 mm vom Flansch 109 und bildet dort eine Art Spitze, weil dort seine beiden Hälften unter einem Winkel von ebenfalls etwa 155° zusammenlaufen. An den beiden Enden 94 und 95 vereinigen sich wie dargestellt die Flanschen 109 und 110 und gehen in zylindrische Abschnitte über, die zum Einrasten in die Ausnehmungen 96 ausgebildet sind und etwa deren Durchmesser haben. Wie die Zeichnungen zeigen, ist auch dieses Federglied symmetrisch zu einer Mittelachse 114 aufgebaut, und es hat etwa die Form eines weit aufgebogenen C bzw. die Querschnittsform einer flachen Schale mit sehr dickem Boden.

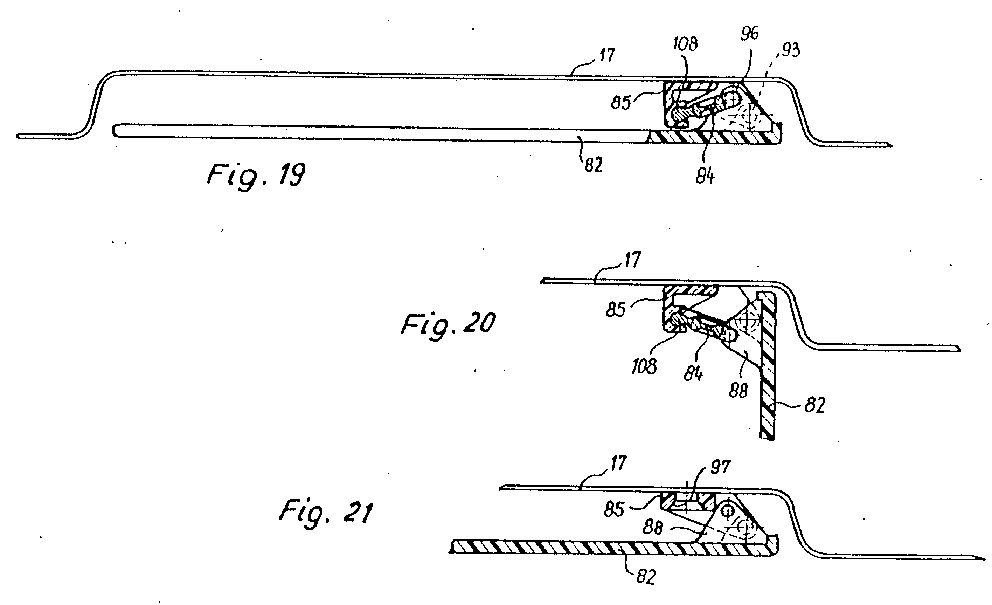

Zur Montage werden die 3 Teile der Klappenvorrichtung, also das Scharnierlager 85, das Federglied 84 und die Klappe 82 durch Einrasten bzw. Einclipsen gelenkig miteinander verbunden, wobei das Federglied eine Vorspannung erfährt, indem der erwähnte Winkel von 155° zwischen oberem und unterem Abschnitt des Flansches 110 wie in Fig. 14 dargestellt auf etwa 170° vergrössert wird, wobei der Flansch 110 gedehnt und der Flansch 109 zusammengedrückt wird. Hierdurch entsteht eine Vorspannung im Federglied 84, welche in der Ruhestellung (Fig. 19) und der Offenstellung (Fig. 20) wirksam ist, um die Klappe 82 in diesen beiden Stellungen sicher festzuhalten, aber ein ungehindertes Öffnen bzw. Schliessen durch dem Benutzer zu ermöglichen.

Wie man aus einem Vergleich der Fig. 19 und 20 ohne weiteres entnimmt, befindet sich die Kniehebelanordnung bei einem Öffnungswinkel der Klappe 82 von ca. 45° in ihrer Totpunktstellung, d. h. dann liegt das Federglied 84 direkt in der — zum Boden der Mulde 17 parallelen — Verbindungslinie zwischen den Mittelpunkten des zylindrischen Vorsprungs 108 und der Ausnehmung 93 (vgl. Fig. 19) und ist gegenüber seiner Länge nach Fig. 19 oder 20 um etwa 18 % in der Länge reduziert, so dass es nach Überschreiten dieser Totpunktlage in der einen oder anderen Richtung sich entspannt und dabei die Klappe 82 entweder voll öffnet oder voll schliesst. Für die bevorzugten Massverhältnisse bei Fig. 19 kann man noch folgende Angaben machen :

Mittelpunktabstand zw. zylindr. Vorsprung 108 u. Ausnehmung 93 : 100 %

Mittelpunktabstand zw. zylindr. Vorsprung 108 u. Ausnehmung 96 : 80 %

Mittelpunktabstand zw. zylindr. Vorsprung 93 u. Ausnehmung 96 : 34 %.

Dasselbe gilt für Fig. 20, d. h. die von den drei angegebenen Grössen aufgespannten Dreiecke in diesen beiden Figuren haben dieselbe Form, sind aber zueinander spiegelsymmetrisch.

Es ist noch darauf hinzuweisen, dass auch hier das Federglied 84 zweckmässig erst nach dem Lackieren und Einbrennen eingehängt wird, d. h. man wird die Enden 94 und 95 erst dann in die Öffnungen 96 einhängen. Auch hier ist der grosse Vorteil gegeben, dass die Kraft des Federglieds 84 an 2 räumlich voneinander getrennten Stellen und gleichmässig verteilt in die Klappe 82 eingeleitet wird. Wie man Fig. 15 entnimmt, ist das Federglied 84 flach ausgebildet, um Verwindungen bei Belastung zu vermeiden, d. h. die Flansche 109 und 110 liegen alle in derselben Ebene, ebenso die Zapfen 94 und 95 an ihren Enden und der zylindrische Vorsprung 108.

Die Erfindung ist also optimal an die beengten Raumverhältnisse angepasst, wie sie für Tankklappenmulden an kraftfahrzeugen typisch sind und bringt eine sehr elegante Lösung für die Kinematik, die vom Markt gefordert wird, um die Klappe sicher in der Offenstellung und der Schliesstellung zu halten.

**Patentansprüche**

1. Tankklappenvorrichtung für ein Fahrzeug zur Abdeckung einer flachen Karosseriemulde (17) dieses Fahrzeugs, mit einem Scharnier (11 ; 63 ; 85) zur drehbaren Anlenkung einer Tankklappe (10 ; 65 ; 82), welche in ihrer Schließstellung eine in der Karosseriemulde (17) vorgesehene Einfüllöffnung (z. B. 83) und diese Karosseriemulde (17) abdeckt, und mit einer Kniehebelanordnung (z. B. 27, 51), welche die Tankklappe (10 ; 65 ; 82) in ihrer Offen- und ihrer Schließstellung festhält und in einer Zwischenstellung eine gestreckte Lage einnimmt, wobei einer der Hebel der Kniehebelanordnung (z. B. 27, 51) als starrer und mit der Tankklappe (10 ; 65 ; 82) starr verbundener Hebel (z. B. 51) und der andere Hebel als quer zu seiner Längserstreckung federnd auslenkbarer Biegestab (27 ; 60 ; 84) ausgebildet ist, dessen beide Enden (25, 26 ; 77, 78 ; 94, 95) entweder mit der Tankklappe (65 ; 82) bzw. dem starren Hebel (74 ; 87) oder mit einem fahrzeugfesten Teil (15, 16) gelenkig verbunden sind und dessen Mittelabschnitt (28 ; 61 ; 108) entweder mit dem fahrzeugfesten Teil (62 ; 104) oder mit dem starren Hebel (36) bzw. mit der Tankklappe (10) gelenkig verbunden ist, wobei die beiden Enden (22, 23 ; 61, 66 ; 93, 108) der Kniehebelanordnung (z. B. 27, 51) mit dem Fahrzeug gelenkig verbunden sind und bei geschlossener Tankklappe (10 ; 65 ; 82) in der flachen Karosseriemulde (17) und unterhalb der der Fahrzeugaußenseite abgewandten Seite der Tankklappe (10 ; 65 ; 82) liegen.

2. Tankklappenvorrichtung nach Anspruch 1, dadurch gekennzeichnet, daß der als Biegestab (27 ; 60 ; 84) ausgebildete Hebel auf einem Teil (28 ; 61 ; 108) seiner Längserstreckung etwa parallel zu der Drehachse (z. B. 22) der Tankklappe (10 ; 65 ; 82) verläuft.

3. Tankklappenvorrichtung nach Anspruch 2, dadurch gekennzeichnet, daß der Biegestab (17 ; 60) etwa die Querschnittsform eines tiefen Tellers mit breitem Tellerrand oder einer flachen Schale mit tiefem Boden aufweist.

4. Tankklappenvorrichtung nach einem der Ansprüche 1-3, dadurch gekennzeichnet, daß die Tankklappe (10 ; 65 ; 82) als Kunststoffteil ausgebildet und mit einer Ausnehmung (38) zum Einclipsen des zugeordneten Abschnitts (28) des Biegestabs (27) ausgebildet ist.

5. Tankklappenvorrichtung nach einem der vorhergehenden Ansprüche, dadurch gekennzeichnet, daß die Länge des starren Hebels (Fig. 5 : 51) in der Schließstellung etwa das 0,3 ... 0,5-fache der Länge des als Federglied ausgebildeten Hebels (27 ; 60 ; 84) beträgt.

6. Tankklappenvorrichtung nach einem der vorhergehenden Ansprüche, dadurch gekennzeichnet, daß die Tankklappe (10 ; 65 ; 82) als Kunststoffteil ausgebildet ist und mit ihr einstückige Teile (41 bis 44 ; 71 bis 76 ; 86 bis 89) zur Anlenkung an in Richtung weg vom Fahrzeug ausgebildeten Vorsprüngen eines mit dem Fahrzeug verbindbaren Scharnierteils (15, 16 ; 63 ; 85) aufweist.

7. Tankklappenvorrichtung nach Anspruch 2 oder 3, dadurch gekennzeichnet, daß mindestens eines der für die Anlenkung des Biegestabs vorgesehenen Elemente (15, 16) zum Ein- und Aushängen des Biegestabs relativ zu diesem Element (15) ausgebildet ist.

8. Tankklappenvorrichtung nach Anspruch 7, dadurch gekennzeichnet, daß zum Aus- und Einhängen des Biegestabs (27 ; 60) am zugeordneten Element (15 ; 62) ein nach einer Seite geöffneter Schlitz (55) vorgesehen ist.

9. Tankklappenvorrichtung nach einem der vorhergehenden Ansprüche, dadurch gekennzeichnet, daß im eingebauten Zustand die Enden (25, 26 ; 77, 78 ; 94, 95) des Biegestabs (27 ; 60 ; 84) bei geschlossener Tankklappe etwa parallel zu dieser verlaufen.

10. Tankklappenvorrichtung nach einem der vorhergehenden Ansprüche, dadurch gekennzeichnet, daß der Mittelabschnitt (28) des Biegestabs (27) beidseits unter einem stumpfen Winkel (alpha) in einen etwa geraden Abschnitt (56, 56') übergeht, und daß letztere Abschnitte ebenfalls unter einem stumpfen Winkel (beta) in die Endabschnitte (25, 26) übergehen.

11. Tankklappenvorrichtung nach Anspruch 10, dadurch gekennzeichnet, daß die Endabschnitte (25, 26) des Biegestabs (27) im ungespannten Zustand zwischen sich einen Winkel von etwa 120 bis 140° einschließen.

12. Tankklappenvorrichtung nach einem der vorhergehenden Ansprüche dadurch gekennzeichnet, daß die Anlenkstellen (79 ; 96) des Biegestabs (60 ; 84) an der Tankklappe (65 ; 82) im Bereich der Anlenkstellen (71, 72, 75, 76 ; 86, 89) der Tankklappe am Fahrzeug bzw. dem an diesem vorgesehenen Scharnier (63 ; 85) und vorzugsweise dicht bei den zweitgenannten Anlenkstellen liegen.

13. Tankklappenvorrichtung nach Anspruch 12, dadurch gekennzeichnet, daß für die Anlenkung der beiden Enden des Biegestabs (60 ; 84) gesonderte Aufnahmeteile (73 ; 74 ; 87, 88) an der Tankklappe vorgesehen sind, welche dicht bei den für die Anlenkung der Tankklappe vorgesehenen Teilen liegen.

14. Tankklappenvorrichtung nach einem der vorhergehenden Ansprüche, dadurch gekennzeichnet, daß der Biegestab (84) als Kunststoffeder ausgebildet ist.

15. Tankklappenvorrichtung nach Anspruch 14, dadurch gekennzeichnet, daß der als Kunststoffeder ausgebildete Biegestab (84) auf mindestens einem Teil seiner Längserstreckung einen Querschnittsverlauf nach Art eines Doppel-T-Trägers (109, 110, 111) aufweist, wobei die federnde Durchbiegung bei Belastung im wesentlichen so erfolgt, daß hierbei der eine Flansch (110) des Doppel-T gestreckt und der andere Flansch (109) komprimiert wird.

16. Tankklappenvorrichtung nach Anspruch 14 oder 15, dadurch gekennzeichnet, daß der als Kunststoffeder ausgebildete Biegestab (84) in seinem Mittelbereich einen etwa zylindrischen Abschnitt (108) aufweist, und daß an dem zur Anlenkung an diesem Abschnitt (108) vorgesehenen Gegenstück (104) von Tankklappe oder Scharnier (85) eine entsprechende Ausnehmung (106, 107) zum Einclipsen dieses Abschnitts (108) vorgesehen ist.

17. Tankklappenvorrichtung nach einem der vorhergehenden Ansprüche, dadurch gekennzeichnet, daß das Scharnier (85) als Kunststoffteil ausgebildet ist und zwei federnde Seitenwangen (99, 100) aufweist, welche für eine gelenkige Rastverbindung mit hierzu komplementären Teilen (86, 89) der Tankklappe (82) ausgebildet sind.

## Claims

1. Fuel tank flap device covering a shallow recess (17) on the bodywork of a motor vehicle, with a hinge joint (11 ; 63 ; 85) for pivotally mounting a tank flap (10 ; 65 ; 82), which in its closed position covers a filler hole (e. g. 83) in the recess (17) and the recess (17) itself, and with a crank-lever arrangement (e. g. 27, 51) which secures the tank flap (10 ; 65 ; 82) in its open and closed positions, and in an intermediate position assumes an elongated state, wherein one of the levers of the crank-lever arrangement (e. g. 27, 51) is constructed as a rigid lever (e. g. 51) rigidly connected to the tank flap (10 ; 65 ; 82) and the other levers is constructed as a bending rod (27 ; 60 ; 84) which is spring-extendible at right angles to its longitudinal extension, the two ends of which (25, 26 ; 77, 78 ; 94, 95) are pivotally connected either to the tank flap (65 ; 82) or the rigid lever (74 ; 87), or to a part (15, 16) fixed to the vehicle, and its middle portion (28 ; 61 ; 108) is pivotally connected either to a part (62, 104) fixed to the vehicle, or to the rigid lever (36) or the tank flap (10), the two ends (22, 23 ; 61, 66 ; 93, 108) of the crank-lever arrangement (e. g. 27, 51) being pivotally connected to the vehicle and, with the tank-flap (10 ; 65 ; 82) closed, lying in the shallow bodywork recess (17) beneath the side of the tank flap (10 ; 65 ; 82) facing away from the vehicle exterior.

2. Fuel tank flap device according to claim 1, characterized in that the lever constructed as the bending member (27 ; 60 ; 84), over a part (28 ; 61 ; 108) of its longitudinal extent, runs generally parallel to the pivot axis (e. g. 22) of the flap (10 ; 65 ; 82).

3. Fuel tank flap device according to claim 2, characterized in that the bending member (27 ; 60) has substantially the cross-sectional shape of a deep plate with a wide rim or a flat dish with a deep base.

4. Fuel tank flap device according to any of claims 1 to 3, characterized in that the flap (10 ; 65 ; 82) is constructed as a plastics material part and is constructed with a recess (38) for clipping round the associated portion (28) of the bending member (27).

5. Fuel tank flap device according to any of the preceding claims, characterized in that the length of the rigid lever (Fig. 5 : 51) in the closed position is approximately 0.3 to 0.5 times the length of the lever (27 ; 60 ; 84) constructed as the spring member.

6. Fuel tank flap device according to any of the preceding claims, characterized in that the flap (10 ; 65 ; 82) is constructed as a plastics material part and comprises integral portions (41 to 44 ; 71 to 76 ; 86 to 89) for articulation to projections of a hinge-joint part (15, 16 ; 63, 85) connectible with the vehicle which projections extend in a direction away from the vehicle.

7. Fuel tank flap device according to claim 2 or 3, characterized in that at least one of the elements (15, 16) provided for mounting the bending member is constructed for supporting and removing the bending member relative to this element (15).

8. Fuel tank flap device according to claim 7, characterized in that for supporting and removing the bending member (27 ; 60) on and from the associated element (15 ; 62) a slot (55) open to one side is provided.

9. Fuel tank flap device according to any of the preceding claims, characterized in that in the installed position the ends (25, 26 ; 77, 78 ; 94, 95) of the bending member (27 ; 60 ; 84), with the flap closed, lie generally parallel to it.

10. Fuel tank flap device according to any of the preceding claims, characterized in that the middle portion (28) of the bending member (27) connects at both ends through an obtuse angle (alpha) with a generally straight portion (56, 56') and that the latter portions connect likewise through an obtuse angle (beta) with the end portions (25, 26).

11. Fuel tank flap device according to claim 10, characterized in that the end portions (25, 26) of the bending member (27) in the unstressed state include an angle of about 120° to 140°.

12. Fuel tank flap device according to any of the preceding claims, characterized in that the mounting positions (79 ; 96) of the bending member (60 ; 84) lie on the flap (65 ; 82) in the region of the mounting positions (71, 72, 75, 76 ; 86, 89) of the flap on the vehicle or on the hinge-joint (63 ; 85) provided on it and preferably close to the second-mentioned mounting positions.

13. Fuel tank flap device according to claim 12, characterized in that, for mounting the two ends of the bending member (60 ; 84), separate mounting parts (73, 74 ; 87, 88) are provided on the flap, which lie close to the parts provided for the mounting of the flap.

14. Fuel tank flap device according to any of the preceding claims, characterized in that the bending member (84) is constructed as a plastics material spring.

15. Fuel tank flap device according to claim 14, characterized in that the bending member (84) constructed as a plastics material spring has, over at least a part of its longitudinal extent, a cross-sectional shape in the form of a double-T beam (109, 110, 111), the resilient bending on loading taking place substantially so that one flange (110) of the double-T is extended and the other flange (109) is compressed.

16. Fuel tank flap device according to claim 14 or 15, characterized in that the bending member (84) constructed as a plastics material spring has a substantially cylindrical portion (108) in its middle section and that, on the counterpart (104) of the flap or hinge-joint (85) provided for mounting of this portion (108), a corresponding recess (106, 107) is provided for clipping round this portion (108).

17. Fuel tank flap device according to any of the preceding claims, characterized in that the hinge-joint (85) is constructed as a plastics material part and has two resilient side plates (99, 100), which are constructed for a hingeable controlled-stop connection with complementary parts (86, 89) of the flange (82).

## Revendications

1. Dispositif à volet d'orifice de réservoir pour véhicule, permettant de masquer un renfoncement plat dans la carrosserie (17) de ce véhicule, comportant une charnière (11 ; 63 ; 85) pour le basculement pivotable ·d'un volet d'orifice de réservoir (10 ; 65 ; 82), qui, en position fermée, masque un orifice de remplissage (par exemple 83) prévu dans le renfoncement de la carrosserie (17), ainsi que ce renfoncement (17), et un arrangement de leviers à genouillère (par exemple 27, 51), qui maintient le volet d'orifice de réservoir (10 ; 65 ; 82) en position ouverte ou fermée, et qui prend, dans une position intermédiaire, une position d'extension, un des leviers de l'arrangement à genouillère (par exemple 27, 51) étant constitué sous forme d'un levier rigide (par exemple 51) relié de façon rigide au volet d'orifice de réservoir ·(10 ; 65 ; 82), l'autre levier étant constitué sous la forme d'une barre de flexion (27 ; 60 ; 84) élastique qui peut fléchir transversalement par rapport à sa longueur, dont les deux extrémités (25, 26 ; 77, 78 ; 94, 95) sont reliées à articulation soit au volet d'orifice de réservoir (65 ; 82) ou au levier rigide (74 ; 87), soit à une partie (15, 16) solidaire du véhicule, et dont la partie moyenne (28 ; 61 ; 108) est reliée à articulation, soit à la partie solidaire du véhicule (62 ; 104), soit au levier rigide (36) ou au volet d'orifice de réservoir (10), les deux extrémités (22, 23 ; 61, 66 ; 93, 108) de l'arrangement de leviers à genouillère (par exemple 27, 51) étant reliées à articulation avec le véhicule, et se trouvant, lorsque le volet d'orifice de réservoir est fermé (10 ; 65 ; 82), dans le renfoncement plat de la carrosserie (17) et sous la face du volet de l'orifice de réservoir (10 ; 65 ; 82) opposée à la face externe du véhicule.

2. Dispositif à volet d'orifice de réservoir selon la revendication 1, caractérisé en ce que le levier constitué sous la forme de barre de flexion élastique (27 ; 60 ; 84) s'étend, au moins sur une partie (28 ; 61 ; 108) de sa longueur, approximativement parallèlement à l'axe de pivotement (par exemple 22) du volet (10 ; 65 ; 82).

3. Dispositif à volet d'orifice de réservoir selon la revendication 2, caractérisé en ce que la barre de flexion élastique (27 ; 60) présente approximativement le profil d'une assiette creuse avec un bord large, ou d'une cuvette plate avec un fond profond.

4. Dispositif à volet d'orifice de réservoir selon l'une des revendications 1 à 3, caractérisé en ce que le volet (10 ; 65 ; 82) est constitué en matière plastique et qu'il est pourvu d'un évidement (38) pour l'enclenchement de la partie correspondante (28) de la barre de flexion élastique (27).

5. Dispositif à volet d'orifice de réservoir selon l'une des revendications précédentes, caractérisé en ce que la longueur du levier rigide (figure 5 : 51) est égale, dans la position de fermeture, à environ 0,3 à 0,5 ̃fois la longueur du levier (27 ; 60 ; 84) constitué comme organe à ressort.

6. Dispositif à volet d'orifice de réservoir selon l'une des revendications précédentes, caractérisé en ce que le volet (10 ; 65 ; 82) est constitué de matière plastique et qu'il présente des parties d'une seule pièce avec lui (41-44 ; 71-76 ; 86-89) pour l'articulation à des parties saillantes dans la direction opposée au véhicule d'un élément de charnière (15 ; 16 ; 63 ; 85) fixable sur·le véhicule.

7. Dispositif à volet d'orifice de réservoir selon la revendication 2 ou 3, caractérisé en ce que au moins un des éléments (15, 16) prévus pour l'articulation de la barre de flexion élastique est constitué pour servir à l'accrochage et le décrochage de la barre de flexion élastique relativement à cet élément (15).

8. Dispositif à volet d'orifice de réservoir selon la revendication 7, caractérisé en ce que, pour le décrochage et l'accrochage de la barre de flexion élastique (27 ; 60) sur l'élément correspondant (15 ; 62), une fente (55) est prévue qui est ouverte d'un côté.

9. Dispositif à volet d'orifice de réservoir selon l'une des revendications précédentes, caractérisé en ce que, dans l'état monté, les extrémités (25, 26 ; 77, 78 ; 94, 95) de la barre de flexion élastique (27 ; 60 ; 84) s'étendent d'une façon à peu près parallèle au volet dans sa position de fermeture.

10. Dispositif à volet d'orifice de réservoir selon l'une des revendications précédentes, caractérisé en ce que la partie moyenne (28) de la barre de flexion élastique (27) se prolonge des deux côtés, avec un angle obtus (alpha), par une partie qui est à peu près rectiligne (56, 56'), et que ces dernières parties se prolongent également avec un angle obtus (bêta) par les parties d'extrémité (25, 26).

11. Dispositif à volet d'orifice de réservoir selon la revendication 10, caractérisé en ce que les parties d'extrémité (25, 26) de la barre de flexion élastique à l'état non tendu délimitent entre elles un angle d'environ 120 à 140°.

12. Dispositif à volet d'orifice de réservoir selon l'une des revendications précédentes, caractérisé en ce que les points d'articulation (79 ; 96) de la barre de flexion élastique (60 ; 84) sur le volet (65 ; 82) sont situés dans le domaine des points d'articulation (71, 72, 75, 76 ; 86, 89) du volet sur le véhicule ou sur la charnière (63 ; 85) prévue sur celui-ci et de préférence à proximité immédiate des points d'articulation mentionnés en dernier.

13. Dispositif à volet d'orifice de réservoir selon la revendication 12, caractérisé en ce que, pour l'articulation des deux extrémités de la barre de flexion élastique (60 ; 84), des pièces particulières de fixation (73, 74 ; 87, 88) sont prévues sur le volet, lesquelles sont situées tout près des pièces prévues pour l'articulation du volet.

14. Dispositif à volet d'orifice de réservoir selon l'une des revendications précédentes, caractérisé en ce que la barre de flexion élastique (84) est constitué sous la forme d'un ressort en matière plastique.

15. Dispositif à volet d'orifice de réservoir selon la revendication 14, caractérisé en ce que la barre de flexion élastique (84) sous la forme de ressort en matière plastique présente, au moins sur une partie de son extension longitudinale, une section analogue à une poutre en double T (109, 110, 111), le fléchissement élastique en cas de charge intervenant pour l'essentiel de manière à ce que une des brides (110) du double T soit étirée et l'autre bride (109) comprimée.

16. Dispositif à volet d'orifice de réservoir selon la revendication 14 ou 15, caractérisé en ce que la barre de flexion élastique (84) sous la forme de ressort en matière plastique présente, dans sa partie médiane, une section qui est à peu près cylindrique (108), et que, sur contre-pièce (104) du volet ou de la charnière (85) prévue pour l'articulation sur cette partie (108), il est prévu un évidement correspondant (106, 107) pour l'enclenchement de cette partie (108).

17. Dispositif à volet d'orifice de réservoir selon l'une des revendications précedentes, caractérisé en ce que la charnière (85) est constituée de matière plastique et présente deux parties latérales fléchissantes (99, 100) qui sont constituées de façon à assurer une liaison articulée à enclenchement avec les pièces complémentaires (86, 89) du volet (82).

Fig.6

Fig.7

Fig.1

*Fig.2A*

*Fig. 4*

*Fig.2B*

*Fig.3*

0 007 104

Fig.8

Fig.9

Fig.5

Fig. 13

Fig. 10

Fig. 11

Fig. 12

Fig. 14

Fig. 15

Fig. 16

Fig. 22

Fig. 17

Fig. 18

Fig. 19

Fig. 20

Fig. 21